# EUROPEAN PATENT SPECIFICATION

(11) **EP 1 244 824 B1**
(45) Date of publication and mention of the grant of the patent: **02.03.2005**
(21) Application number: 00977811.9
(22) Date of filing: 06.12.2000
(51) Int. Cl.: C23C 24/00

(54) **DENSE REFRACTORY MATERIAL FOR USE AT HIGH TEMPERATURES**
DICHTES FEUERFESTES MATERIAL FÜR HOCHTEMPERATUR-ANWENDUNGEN
MATERIAU REFRACTAIRE DENSE DESTINE A DES USAGES A HAUTES TEMPERATURES

(30) Priority: 09.12.1999 WO PCT/IB99/01982; 25.10.2000 WO PCT/IB00/01551
(43) Date of publication of application: 02.10.2002
(60) Divisional application: 04027040.7
(73) Proprietor: MOLTECH Invent S.A., 1520 Luxembourg (LU)
(72) Inventor: NGUYEN, Thinh, T., CH-1213 Onex (CH); DURUZ, Jean-Jacques, CH-1204 Genève (CH); DE NORA, Vittorio, CH-3968 Veyras (CH)
(74) Representative: Cronin, Brian
(86) International application number: PCT/IB2000/001808
(87) International publication number: WO 2001/042531

(56) References cited:
- EP-A- 0 115 689
- EP-A- 0 266 641
- EP-A- 0 467 540
- WO-A-97/36744
- US-A- 5 310 476

## Description

### Field of the Invention

The invention relates to components which are made of or coated with a refractory material for use at high temperature, in particular cathode blocks of cells for the electrowinning of aluminium from alumina dissolved in a cryolite-based molten electrolyte, arc electrodes of steel arc furnaces and components of molten metal purification apparatus.

The invention relates also to a slurry for producing this refractory material, a method to manufacture these components, apparatus using these components and methods of operating such apparatus.

### Background of the Invention

Carbonaceous materials are important engineering materials used in diverse applications such as aircraft bodies, electrodes, heating elements, structural materials, rocket nozzles, metallurgical crucibles, pump shafts, furnace fixtures, sintering trays, induction furnace susceptors, continuous casting dies, ingot moulds, extrusion canisters and dies, heat exchangers, anodes, high temperature insulation (porous graphite), gas diffusers, aerospace structural materials, bearings, substrates in electronics industry, brazing and joining fixtures, diamond wheel moulds, nozzles, glass moulds etc. Although carbonaceous materials have properties which make them useful for the applications mentioned above, the resistance to oxidation is one property which has limited the use of these materials. Much effort is therefore underway to improve the resistance to oxidation of such materials.

Traditional methods of protecting carbonaceous materials have involved the deposition of adherent and highly continuous layers of materials such as silicon carbide or metals such as aluminium. The deposit of such materials has normally been carried out by techniques such as vapour deposition (both PVD and CVD) or by electrochemical methods. Vapour deposition is an extremely slow and costly process and additionally may not be carried out for large parts such as electrodes. It is also known to plasma spray alumina/aluminium onto the sides of carbon anodes used as anodes for aluminium electrowinning, but this coating method is expensive. Other techniques such as electrochemical methods are limited in the type of materials that may be applied as coatings, and size limitations again may be present.

Various types of TiB₂ or RHM layers applied to carbon substrates have failed due to poor adherence and to differences in thermal expansion coefficients between the titanium diboride material and the carbon substrate.

Recently, protective coatings of refractory hard material applied from a slurry have been successfully used on carbon components, in particular cathodes of aluminium production cells. Such slurries have been disclosed in US Patent 5,364,513 (Sekhar/de Nora).

US Patent 5,651,874 (de Nora/Sekhar) describes a carbon-containing component of a cell for the production of aluminium by the electrolysis of alumina dissolved in a cryolite-based molten electrolyte, which cell component is protected from attack by liquid and/or gaseous components of the electrolyte or products produced during cell operation by a coating of particulate refractory hard metal boride and a colloid bonding applied from a slurry of the boride in a colloidal carrier which comprises at least one of colloidal alumina, silica, yttria, ceria, thoria, zirconia, magnesia, lithia, monoaluminium phosphate or cerium acetate.

US Patent 5,728,466 (Sekhar/de Nora) discloses a carbon cathode for the electrowinning of aluminium, to which a hard surface is provided by adding to the surface of the carbon cathode a layer containing particulate refractory hard metal boride and a colloidal binder which when the carbon cathode is heated reacts with the refractory hard metal boride and carbon from the cathode or from a carbon-containing atmosphere.

### Objects of the Invention

An object of the invention is to provide a component made of or coated with a refractory material from a slurry, which is resistant to aggressive environments and can be used in aluminium electrowinning cells, in steel arc furnaces and apparatus for treating molten metal and other high temperature applications.

Another object of the invention is provide a slurry for producing refractory coatings or bodies which are optionally wettable by molten metal, electrically conductive and electrochemically active for cathodic metal reduction reaction, in particular for the production of aluminium form alumina dissolved in a fluoride-containing molten electrolyte.

A major object of the invention is to provide slurry-applied coatings of refractory hard material to protect components of carbon or other materials, in particular carbon components of cells for the electrowinning of aluminium or aluminium purification apparatus, which coatings have a high density and an improved mechanical resistance, in particular against delamination.

A preferred object of the invention is to provide a component made of or coated with refractory material which can be used in corrosive environments, such as oxidising media or gaseous or liquid corrosive agents at elevated temperature, having an improved resistance against oxidation, corrosion and erosion and which has an improved electrical conductivity, electrochemically active and/or physico-chemical properties.

A further object of the invention is to provide aluminium electrowinning cell components with a slurry-applied coating protecting against oxidation, corrosion and erosion, in particular coated cathodes or drained cathodes with enhanced electrical conductivity, electrochemical activity and physico-chemical properties (aluminium-wettability).

Another object of the invention is to provide electrodes, in particular for arc furnaces for the production of steel, coated on their inactive surfaces with a coating protecting against premature oxidation.

Yet another object of the invention is to provide components for the treatment of molten metals protected with a slurry-applied coating wettable by the molten metal and protecting against oxidation and erosion of the component.

An object of the invention is to provide a component covered with a coating protecting the component against wear and controlling the component's lifetime, the coating's thickness and/or composition being readily adjustable for different parts of the component that may in use be exposed to different to wear conditions.

### Summary of the Invention

It has been observed that particles of refractory metal compounds, e.g. borides such as TiB₂, silicides, nitrides, carbides and phosphides, are surface oxidised when exposed to air or another oxidising media which produces an oxide film of the metal of the refractory metal compound. The present invention is based on the insight that the existence of the oxide film on particles of refractory metal compounds can be used to modify and improve known coatings, e.g. those described in the abovementioned US Patent 5,651,874.

The invention concerns the improvement of the cohesion of the refractory metal compound particles within the refractory material, the density of the refractory material and its mechanical and chemical resistance. These improvements are achieved by suspending a particulate metal oxide in the colloidal and/or polymeric slurry in addition to the suspended particulate refractory metal compound. Upon heating, the suspended particulate metal oxide reacts with the polymeric and/or colloidal metal oxide to form a mixed oxide that is at least partly miscible with the mixed oxide produced from the reaction between the polymeric and/or colloidal bonding metal oxide and the oxide surface of the refractory metal compound particles.

Upon reaction, the refractory metal compound particles are not merely bonded together by mixed oxide joints between them but are bonded within a coherent mixed oxide matrix formed by the mixed oxides of the colloidal and/or polymeric oxide reacted on the one hand with the suspended particulate metal oxide and on the other hand with the surface oxide of the refractory metal compound.

The high cohesion of the constituents of this refractory material reduces the risk of cracks and increases the impermeability of the refractory material to infiltration of aggressive constituents from the environment during use.

One aspect of the invention relates to a component which is made of or coated with a refractory material for use at high temperature. The refractory material comprises particles of a refractory metal compound in an oxide matrix. The refractory metal compound is selected from metal borides, silicides, nitrides, carbides and phosphides. The oxide matrix comprises a bonding mixed oxide made of a single mixed oxide or a plurality of miscible mixed oxides.

The refractory material is obtainable from a heat treated slurry that comprises:
a) a colloidal and/or polymeric carrier that comprises colloidal and/or polymeric oxide of at least one metal;
b) suspended particles of the refractory metal compound that are covered with an integral film of oxide of the metal of the refractory metal compound, the oxide film being reactable upon heat treatment with said colloidal and/or polymeric oxide to form a mixed oxide comprised in said bonding mixed oxide; and
c) suspended metal oxide particles which are reactable upon heat treatment with said colloidal and/or polymeric oxide to form a.mixed oxide comprised in said bonding mixed oxide.

The bonding mixed oxide, including the mixed oxide formed from the reaction of the oxide film and the colloidal and/or polymeric oxide, is a single mixed oxide when the metal of the suspended metal oxide particles is the same as the metal of the suspended refractory metal compound particles and the reactable oxide of the colloidal and/or polymeric oxide is an oxide of one metal only, e.g. a slurry consisting of suspended particles of surface oxidised titanium diboride and of titanium oxide in colloidal alumina that produces a bonding mixed oxide consisting of titanium-aluminium mixed oxide.

The bonding mixed oxide, including the mixed oxide formed from the reaction of the oxide film and the colloidal and/or polymeric oxide, consists of a plurality of miscible mixed oxides when at least one metal of the suspended metal oxide particles is different to the metal of the suspended refractory metal compound particles and/or when the colloidal and/or polymeric oxide comprises reactable oxides of different metals, e.g. a slurry consisting of suspended particles of surface oxidised titanium diboride and of magnesium oxide in colloidal alumina that produces a bonding mixed oxide consisting of miscible titanium-aluminium mixed oxide and magnesium-aluminium mixed oxide.

When the metals of the suspended metal oxide and the refractory metal compound are different, it is advantageous to use constituents of the slurry that produce mixed oxides having a great miscibility. The greater the miscibility of the mixed oxides the greater is the ratio of the bonding mixed oxide in the oxide matrix which increases the matrix's stability and density.

The bonding mixed oxide may comprise a mixed oxide of the metal(s) of said colloidal and/or polymeric oxide and at least one metal selected from titanium, silicon, chromium, vanadium, zirconium, hafnium, niobium, tantalum, molybdenum and cerium which is derived from the oxide film of said refractory metal compound suspended particles and/or said suspended metal oxide particles.

The colloidal and/or polymeric oxide may be selected from colloidal and/or polymeric alumina, ceria, lithia, magnesia, silica, thoria, yttria, zirconia, tin oxide and zinc oxide, and mixtures thereof.

For instance, the refractory material comprises titanium diboride as the refractory metal compound and a titanium-aluminium mixed oxide-containing bonding mixed oxide. This refractory material can be obtained from a slurry of colloidal alumina containing suspended particles of surface oxidised titanium diboride and of titanium oxide or another metal oxide, e.g. silica or magnesia, that forms a mixed oxide with alumina which is miscible with titanium-aluminium mixed oxide.

Usually, the bonding mixed oxide constitutes at least 10 weight%, typically at least 30 weight% and preferably at least 50 weight%, of the oxide matrix. The oxide matrix may further comprise non-reacted particles of the colloidal and/or polymeric oxide and/or non-reacted particles of the suspended metal oxide.

As stated above, the bonding mixed oxide may consist of a single mixed oxide or a plurality of miscible mixed oxides. When the bonding mixed oxide consists of miscible mixed oxides it can be saturated with a miscible mixed oxide. Thus, in addition to the bonding mixed oxide, the oxide matrix may comprises in a separate phase the mixed oxide which is in excess to saturation. This may happen when the mixed oxides forming the bonding mixed oxide are only partly miscible.

The component may be a body that is coated with the refractory-material coating, the coating comprising at least two different grades of refractory compounds in one or several layers. For example, the coating comprises a plurality of layers, each layer containing only one grade of refractory metal compound.

To produce thick coatings or self-sustaining bodies, it is preferred that the refractory material is produced from a colloidal and/or polymeric carrier that contains different grades of colloidal and/or polymeric particles, as taught in EP 0 932 589 (Sekhar/Duruz/Liu). Combinations of different grades of colloidal and/or polymeric carrier improve the packing of the coating particles and reduce the risk of cracks when the coating is dried and/or heat treated.

When the component is used for applications in which it comes into contact with molten aluminium or another metal, the bonding mixed oxide and the refractory metal compound are preferably substantially inert to and insoluble in the molten metal.

The constituents of the slurry producing the refractory material can be such that the refractory material is resistant to attack by molten fluoride-containing electrolyte and/or oxidising gas.

For certain applications in which the component contacts molten metal, the oxide matrix further comprises a wetting agent consisting of a metal oxide that is reactable with the molten metal to form an oxide by transfer of the oxygen from the wetting agent to the molten metal and an alloy of the molten metal and the metal of the wetting agent.

For instance, when the refractory material comprises an aluminium-wetting agent and is exposed to molten aluminium, the molten aluminium reacts with the aluminium-wetting agent to form alumina and an alloy of aluminium and the metal of the wetting agent permitting infiltration of aluminium in the refractory material without dissolution of the bonding oxide or the refractory metal compound. The molten aluminium infiltration makes the refractory material aluminium-wettable without dissolving it. The aluminium-wetting agent is typically selected from oxides of manganese, iron, cobalt, nickel, copper, zinc, molybdenum, the Lanthanides and rare earth metals.

In one embodiment, the component comprises a carbon body coated with the aluminium-wettable refractory material containing the aluminium-wetting agent. The aluminium-wettable refractory material is bonded to the carbon body through an anchorage layer which is free from constituents that are miscible or able to react with molten aluminium. The density of the anchorage layer and its inertness to molten aluminium is such that the anchorage layer forms a barrier to molten aluminium, i.e. no molten aluminium can infiltrate the anchorage layer and penetrate into the carbon body to cause damage, as demonstrated in Example 4.

Advantageously, the composisiton of the aluminium-wettable refractory material is the same as the composition of the anchorage layer plus the wetting agent. Because of the composition compatibility, the anchorage layer and the aluminium-wettable refractory material are intimately bonded upon heat treatment by a continuous oxide matrix extending therethrough.

The aluminium-wettable refractory material may be covered with a start-up layer applied from a slurry made of an aluminium-wetting agent in a polymeric and/or colloidal binder. As opposed to the aluminium-wettable refractory material, this start-up layer constitutes upon heat treatment a temporary layer, the temporary layer protecting the aluminium-wettable refractory material, in particular against oxidising gas and/or molten electrolyte attack during start-up in an aluminium electrowinning cell. The start-up layer also promotes wetting of the aluminium-wettable refractory material by molten aluminium. During use and upon wetting, the start-up layer may be washed away.

As mentioned above, the thickness of layers applied from colloidal and/or polymeric slurries can be increased by combining different grades of colloids and/or polymers. For example, when the anchorage layer is a current carrying layer and of a composition that is free of constituents enhancing the conductivity, it is preferable to limit its thickness by applying it from a slurry that contains a single grade colloid or polymer. For aluminium production cathodes, the thickness of the anchorage layer is typically of the order of 100 to 150 micron or below.

Conversely, a layer of the aluminium-wettable refractory material is rendered well conductive by being infiltrated during use with molten aluminium that reacts with the aluminium-wetting agent to form alumina and a well conductive alloy of aluminium and the metal of the wetting agent. Therefore, the thickness of such a refractory material layer can be increased to increase the layer's lifetime without adverse effect on its electrical conductivity. For this purpose, the aluminium-wettable refractory material may be produced from a slurry that comprises a multi-grade colloidal and/or polymeric carrier. For aluminium production cathodes, the thickness of the layer of aluminium-wettable material is typically of the order of 1 to 3 mm.

The overall electrical resistance of this composite coating, i.e. anchorage layer plus aluminium-wettable refractory material, is much lower, typically from about 100 to 1000 times lower, than that of prior art slurry-applied coatings of equivalent thickness, e.g. as disclosed in EP 0 932 589, which are made of materials whose electrical resistivity is of the order of the resistivity of the anchorage layer. At room temperature, the overall electrical resistivity of the composite coating according to the invention is typically of the order of 1 Ω, whereas prior art coatings of equivalent thickness have an overall resistivity of the order of 500 Ω.

Usually, the useful lifetime of the start-up layer is short, typically less than 24 hours after start-up. After a few hours the aluminium-wettable refractory material is completely wetted by molten aluminium rendering the start-up layer superfluous. Therefore, the start-up layer's thickness can be quite small, e.g. comparable to the thickness of the anchorage layer, and produced from a slurry containing a single grade colloid or polymer.

Another aspect of the invention is a slurry which upon heat treatment produces the refractory material described above.

A further aspect of the invention is a method of manufacturing the above described component. The method comprises providing a slurry as described above and heat treating the slurry to react the colloidal and/or polymeric oxide with the oxide film of the refractory metal compound and with the suspended metal oxide particles to form the bonding mixed oxide of the oxide matrix that contains the refractory metal compound particles.

As mentioned above, the entire component may be made of the refractory material or only part thereof. In particular, the component may be coated with the refractory material by applying one or more layers of the slurry onto the component and heat treating the slurry. Moreover, a plurality of layers may be applied from one or more slurries, each applied layer being allowed to dry and/or subjected to a heat treatment before application of the next layer.

### Applications of Components of the Invention

The invention also relates to an apparatus for operation at high temperature which comprises at least one component that is made of or coated with the above described refractory material that is exposed during operation of the apparatus to high temperature conditions.

As stated above, the component of the invention is particularly suited for use in an electrolytic cell for cathodically producing aluminium from alumina dissolved in a fluoride-containing molten electrolyte. The component of the invention may be used as a cathode, in particular a drained cathode, part of the cell bottom or a cell sidewall.

A further application of the above described component relates to steel arc furnaces for treating steel to produce iron, in particular as a holder for arc electrodes or as a carbon arc electrode having at least one inactive surface coated with the refractory material.

Furthermore, the component may be used in an apparatus for treating molten metal, such as molten aluminium, magnesium, iron, steel or copper. During use, the component is exposed to the molten metal and/or an oxidising media.

This apparatus can be used for separating molten metal from impurities and/or separating constituents of an alloy metal by centrifugal and/or gravitational force.

The apparatus optionally comprises means for imparting a rotary motion to the molten metal usually about a substantially vertical axis and is so arranged that during use at least part of a wear-exposed surface of the refractory material of the component is temporarily or permanently in contact with molten metal.

The contacting molten metal can be static or in motion relative to the component's wear-exposed surface. The component of the invention may be a vessel containing the molten metal, a stirrer for imparting a movement to the metal, a stator that in use dips in the molten metal and is arranged to deliver treating fluid into the molten metal, a rotatable stirrer arranged to dip in and rotate the molten metal during operation, or another type of disperser or a part thereof.

The component may consist of a coated carbon-based or carbide-based material, in particular petroleum coke, metallurgical coke, anthracite, graphite, amorphous carbon or mixtures thereof. Alternatively, the coated part of the coated component consists of metal-based material.

Whereas the coating of invention has been described with particular reference to components of aluminium electrowinning cells, arc electrodes and metal treatment systems, the invention is useful inter-alia for protecting the various engineering components made of carbon or other materials listed at the outset.

Such components may have a carbonaceous substrate, or a substrate of a metal, alloy, intermetallic compound, ceramic or refractory material, to which the coating is applied.

Further aspects and details of the invention will become apparent in the Detailed Description and in the appended Claims.

### Brief Description of the Drawings

Embodiments of the invention will now be described by way of example with reference to the accompanying schematic drawings, wherein:
- Figure 1 shows a schematic cross-sectional view of an aluminium production cell with carbonaceous drained cathodes having a coating in accordance with the invention;
- Figure 2 schematically shows an arc electrode furnace incorporating coatings according to the invention;
- Figure 3 shows an apparatus for the purification of a molten metal having a carbonaceous stirrer protected with a coating according to the invention;
- Figure 3a is an enlarged schematic sectional view of part of the stirrer shown in Figure 3; and
- Figure 4 schematically shows a variation of the stirrer shown in Figure 3.

### Detailed Description

### Aluminium Electrowinning Cell:

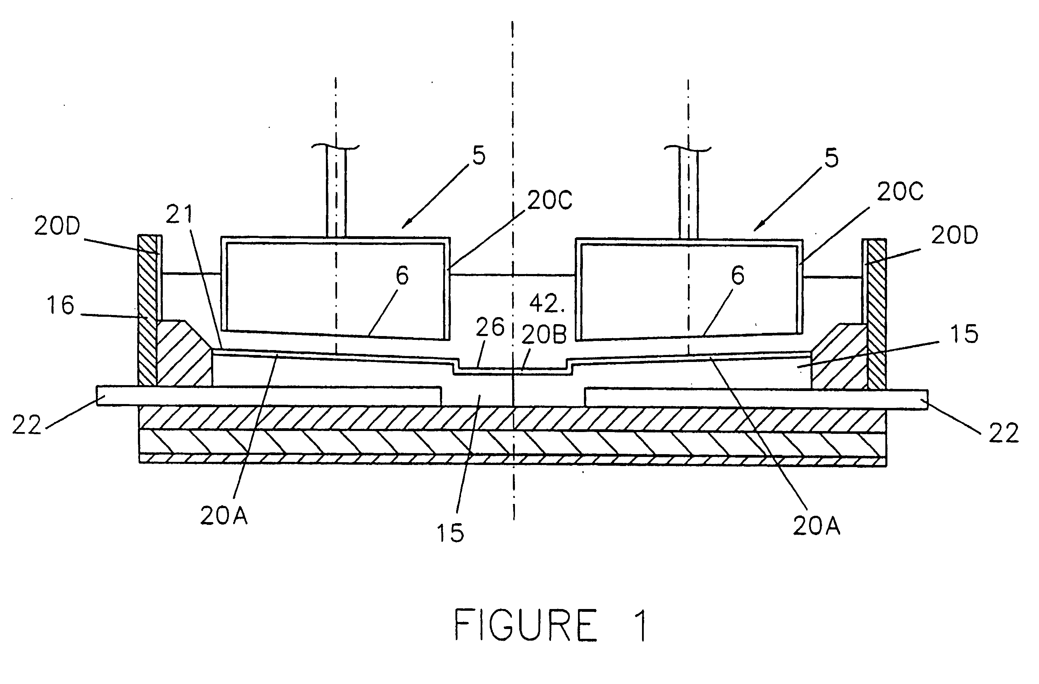

Figure 1 shows an aluminium electrowinning cell comprising a series of carbonaceous anode blocks 5 having operative surfaces 6 suspended over a drained sloping flattened generally V-shaped cathode surface 21 in a fluoride-containing molten electrolyte 42 containing dissolved alumina.

The drained cathode surface 21 is formed by the surface of an aluminium-wettable coating 20A applied to the upper surfaces of a series of juxtaposed carbon cathode blocks 15 extending in pairs arranged end-to-end across the cell. The aluminium-wettable coating 20A is deposited from on or more colloidal and/or polymeric slurries according the invention, for instance as embodied in Examples 1, 1a, 2 or 2a but preferably as disclosed in Example 4.

The cathode blocks 15 comprise, embedded in recesses located in their bottom surfaces, current supply bars 22 of steel or other conductive material for connection to an external electric current supply.

The drained cathode surface 21 is divided by a central aluminium collection groove 26 located between pairs of cathode blocks 15 arranged end-to-end across the cell. The aluminium collection groove 26 is situated at the bottom of the drained cathode surface 21 and is arranged to collect the product aluminium draining from the cathode surface 21. The aluminium collection groove 26 is coated with an aluminium-wettable coating 20B according to the invention.

The anode blocks 5 too are coated with a refractory coating 20C on their inactive surfaces as shown in Figure 1 or only on their top surface and shoulders, i.e. only the top surfaces and the upper part of the lateral surfaces. The anodes are not coated on the operative anode surfaces 6 which are immersed as such in the molten electrolyte 42. This coating 20C does not need to be particularly wettable to molten aluminium and a coating applied form a slurry as described in Example 1 or 1a would be sufficient. However, to further improve the coating's protection against oxidation, it is advantageous to add oxide-free or partly oxidised metal particles, e.g. oxide(s) of iron, copper and/or nickel, to the slurry, e.g. as disclosed in Examples 1 and 2a. Further to improve the coating's resistance it can also be made aluminium-wettable and wetted with aluminium before use.

The cell comprises carbonaceous sidewalls 16 exposed to molten electrolyte and to the environment above the molten electrolyte, but protected against the molten electrolyte 42 and the environment above the molten electrolyte with a coating 20D according to the invention. The coating 20D may be of the same composition as the anode coating 20C.

The method of application of the coatings 20A,20B,20C,20D comprises applying to the surface of the component a colloidal and/or polymeric slurry as specified above, followed by drying. The cathode coating 20A and the collection groove coating 20B can be heat treated before or after installation in the aluminium production cell, and when the coating contains oxidised metal particles, e.g. oxides of nickel, iron or copper, the reaction of these particles with molten aluminium can be done before or during use. However, when appropriate, the anode coating 20C and the sidewall coating 20D should be heat treated and reacted with molten aluminium before use in the cell since these components do not contact molten aluminium during use.

The method of coating the components 5,15,16 of the present invention by application of the slurry involves painting (by brush or roller), dipping, spraying, or pouring the slurry onto the components 5,15,16 and allowing to dry before another layer is added. The coating 20A,20B,20C,20D does not need to be entirely dry before the application of the next layer. It is preferred to heat at least the final coating 20A,20B,20C,20D with a suitable heat source so as to completely dry it and improve densification. Heating and drying take place preferably at about 80-200°C, usually for half an hour to several hours, and further heat treatments are possible.

The surfaces of the carbon components 5,15,16 to be coated with this slurry may be treated by sand blasting or pickled with acids or fluxes such as cryolite or other combinations of fluorides and chlorides prior to the application of the coating 20A,20B,20C,20D. Similarly the surfaces may be cleaned with an organic solvent such as acetone to remove oily products and other debris prior to coating. These treatments will enhance the bonding of the coatings to the component.

Before or after application of the coating 20A,20B,20C,20D and before use, the surfaces of the components 5,15,16 can be painted, sprayed, dipped or infiltrated with reagents and precursors, gels and/or colloids.

In operation of the cell illustrated in Figure 1, alumina dissolved in the molten electrolyte 42 at a temperature of 750° to 960°C is electrolysed between the anodes 5 and the cathode blocks 15 to produce gas on the operative anodes surfaces 6 and molten aluminium on the aluminium-wettable drained cathode coating 20A.

The cathodically-produced molten aluminium flows down the inclined drained cathode surface 21 into the aluminium collection grooves 26 onto the aluminium-wettable coating 20B from where it flows into an aluminium collection reservoir for subsequent tapping.

Figure 1 shows a specific aluminium electrowinning cell by way of example. It is evident that many alternatives, modifications and variations will be apparent to those skilled in the art. For instance, the cell may have one or more aluminium collection reservoirs across the cell, each intersecting the aluminium collection groove to divide the drained cathode surface into four quadrants as described in PCT/IB00/00476 (de Nora). The anodes may be made of inert materials and have an electrochemically active structure of grid-like design to permit electrolyte circulation, as for example disclosed in PCT/IB99/01739 (de Nora/Duruz).

### Arc Furnace:

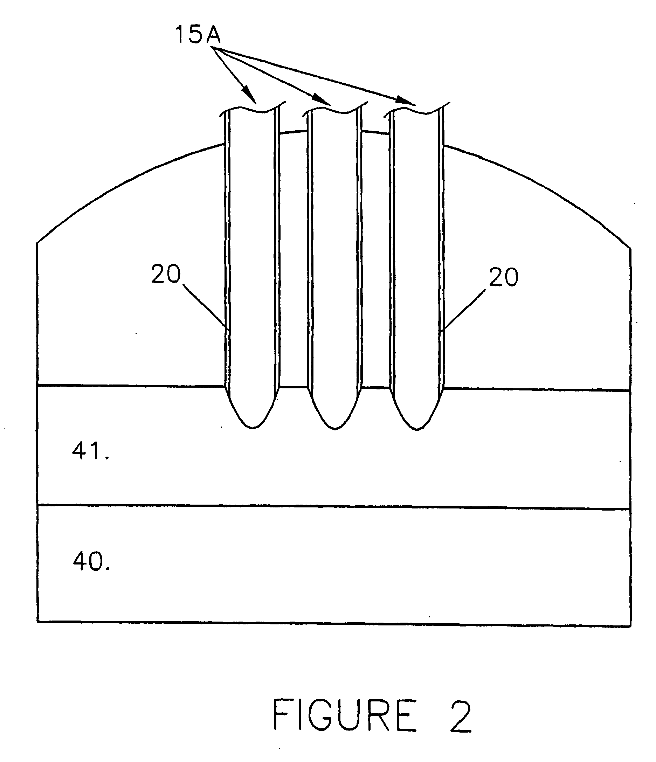

The arc furnace shown in Figure 2 comprises three consumable electrodes 15A arranged in a triangular relationship. For clarity, the distance between the electrodes 15A as shown in Figure 2 has been proportionally increased with respect to the furnace. Typically, the electrodes 15A have a diameter between 200 and 500 mm and can be spaced by a distance corresponding to about their diameter.

The electrodes 15A are connected to an electrical power supply (not shown) and suspended from an electrode positioning system above the cell which is arranged to adjust their height.

The consumable electrodes 15A are made of a carbon substrate laterally coated with a coating 20 protecting the carbon substrate from oxidising gas. According to the invention, the coating is deposited from a colloidal and/or polymeric slurry applied onto the carbon substrate as one or more layers which are dried and/or cured. The coating may contain metal oxide particles which are reactable with molten aluminium, e.g. as disclosed in Examples 2 and 2a, in which case the coating should be exposed before use to molten aluminium so that the reactable particles react with aluminium.

The method of application of the coating 20 is similar to the method described in relation to the cathode blocks 15 described above.

The bottom of electrodes 15A which is consumed during operation and constitutes the electrodes' operative surface is uncoated. The coating 20 protects only the electrodes' lateral faces against premature oxidation.

The electrodes 15A dip in an iron source 41, usually containing iron oxide or oxidised iron, such as scrap iron, scrap steel and pig iron. Preferably, the iron source 41 further comprises reductants selected from gaseous hydrogen, gaseous carbon monoxide or solid carbon bearing reductants. The reductants may also comprise non-iron minerals known as gangue which include silica, alumina, magnesia and lime.

The iron source 41 floats on a pool of liquid iron or steel 40 resulting from the recycling of the iron source 41.

During use, a three phase AC current is passed through electrodes 15A, which directly reduces iron from the iron source 41. The reduced iron is then collected in the iron or steel pool 40. The gangue contained in the reduced iron is separated from the iron by melting and flotation forming a slag (not shown) which is removed, for example through one or more apertures (not shown) located on sidewalls of the arc furnace at the level of the slag.

The pool of iron or steel 40 is periodically or continuously tapped for instance through an aperture (not shown) located in the bottom of the arc furnace.

### Molten Metal Purification Apparatus:

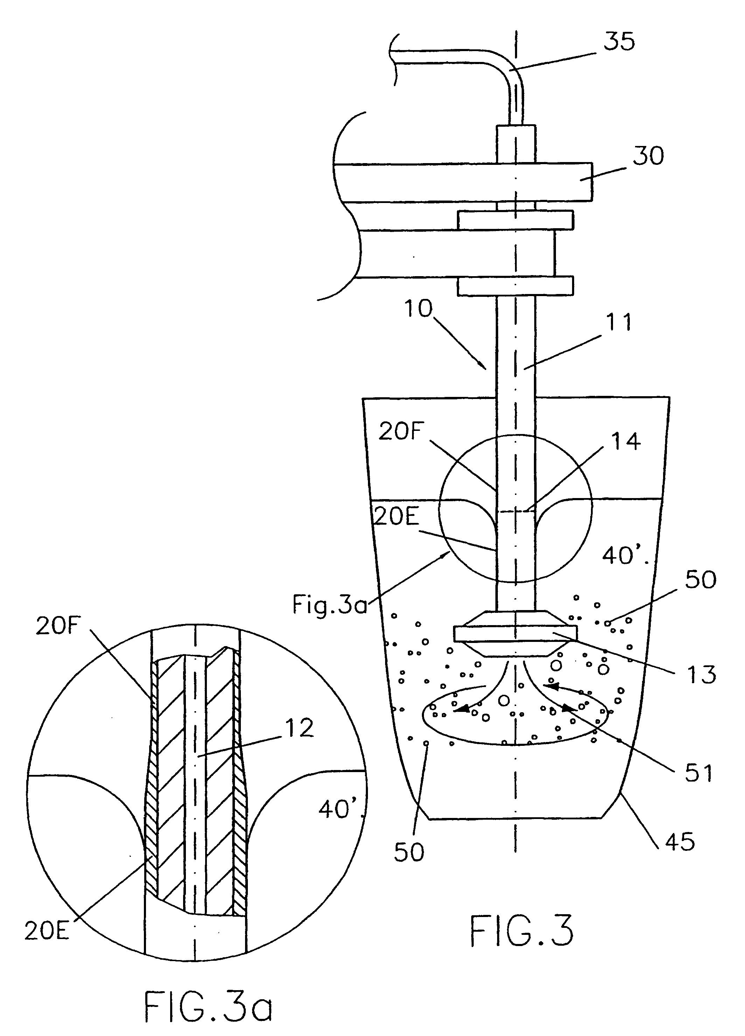

The molten metal purification apparatus partly shown in Figure 3 comprises a vessel 45 containing molten metal 40', such as molten aluminium, to be purified. A rotatable stirrer 10 made of carbon-based material, such as graphite, is partly immersed in the molten metal 40' and is arranged to rotate therein.

The stirrer 10 comprises a shaft 11 whose upper part is engaged with a rotary drive and support structure 30 which holds and rotates the stirrer 10. The lower part of shaft 11 is carbon-based and dips in the molten metal 40' contained in vessel 45. At the lower end of the shaft 11 is a rotor 13 provided with flanges or other protuberances for stirring the molten metal 40'.

Inside the shaft 11, along its length, is an axial duct 12, as shown in Figure 3a, which is connected at the stirrer's upper end through a flexible tube 35 to a gas supply (not shown), for instance a gas reservoir provided with a gas gate leading to the flexible tube 35.

The axial duct 12 is arranged to supply a fluid to the rotor 13. The rotor 13 comprises a plurality of apertures connected to the internal duct 12 for injecting the gas into the molten metal 40', as shown by arrows 51.

The lower part of the shaft 11, i.e. the immersed part and the interface region at or about the meltline 14 of the shaft, as well as the rotor 13 are coated with a coating 20E deposited from a colloidal and/or polymeric slurry according to the invention which improves the resistance to erosion, oxidation and/or corrosion of the stirrer during operation.

As shown in Figure 3, the upper part of shaft 11 is also protected with a coating 20F, against oxidation and/or corrosion. The upper part of the carbon-based shaft 11 is coated with a thin coating of refractory material 20F providing protection against oxidation and corrosion, whereas the coating 20E protecting the immersed part of the shaft 11 and the rotor 13 is a thicker coating of refractory material providing protection against erosion, oxidation and corrosion. Such a coating gradation is appropriate for batch processes during which the stirrer is alternatively exposed to molten metal and the atmosphere. For continuous purification processes, the coating may be of uniform thickness.

Likewise, surfaces of the vessel 45 which come into contact with the molten metal may be protected with an aluminium-wettable coating containing oxidised metal particles reactable with molten aluminium according to the invention, as described in relation to the anodes, cell sidewalls or arc furnace electrodes. The coating is thereby further protected against oxidation by a surface film of aluminium.

The method of application of the coating 20E,20F is similar to the method described in relation to the cathode blocks 15 described above.

During operation of the apparatus shown in Figure 3, a reactive or non-reactive fluid, in particular a gas 50 alone or a flux, such as a halide, nitrogen and/or argon, is injected into the molten metal 40' contained in the vessel 45 through the flexible tube 35 and stirrer 10 which dips in the molten metal 40'.

The stirrer 10 is rotated at a speed of about 100 to 500 RPM so that the injected gas 50 is dispersed throughout the molten metal in finely divided gas bubbles. The dispersed gas bubbles 50, with or without reaction, remove impurities present in the molten metal 40' towards its surface, from where the impurities may be separated thus purifying the molten metal.

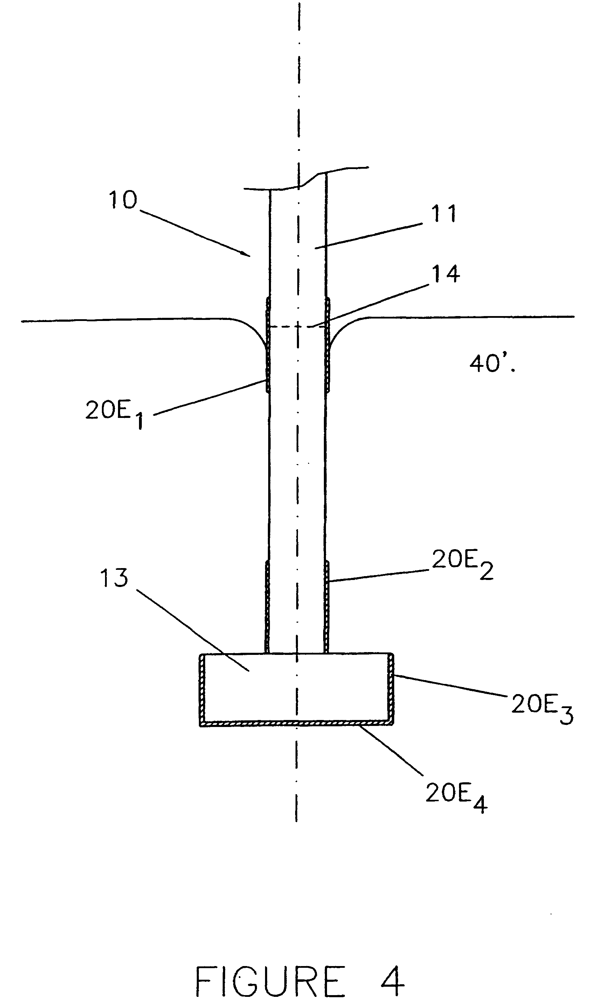

The stirrer 10 schematically shown in Figure 4 dips in a molten metal bath 40' and comprises a shaft 11 and a rotor 13. The stirrer 10 may be of any type, for example similar to the stirrer shown in Figure 3 or of conventional design as known from the prior art. The rotor 13 of stirrer 10 may be a high-shear rotor or a pump action rotor.

In Figure 4, instead of coating the entire shaft 11 and rotor 13, parts of the stirrer 10 liable to erosion are selectively coated with a coating according to the invention.

The interface portion at and about the meltline 14 of the carbon-based lower part of the shaft 11 is coated with a refractory interface coating 20E₁, for instance over a length of up to half that of the shaft 11. Excellent results have been obtained with a coating over a third of shaft 11. However, the length of coating 20E₁ could be a quarter of the length of shaft 11 or even less, depending on the design of stirrer 10 and the operating conditions.

In addition to the interface portion of such stirrers, other areas may be liable to erode, again depending on the design and operating conditions of the stirrers. The schematically shown stirrer 10 in Figure 4 illustrates further coated surfaces which are particularly exposed to erosion. The lower end of the shaft 11 adjacent to the rotor 13 is protected with a coating 20E₂, the lateral surface of rotor 13 is protected with a coating 20E₃ and the bottom surface of the rotor 13 is coated with a coating 20E₄.

For each specific stirrer design, the coating or different coatings on different parts of the stirrer, such as coatings 20E₁, 20E₂, 20E₃ and 20E₄ shown in Figure 4, may be adapted as a function of the expected lifetime of the stirrer. For optimal use, the amount and location of such coatings can be so balanced that they each have approximately the same lifetime.

In an alternative embodiment (not shown), the coating on such stirrers may be continuous as illustrated in Figure 3 but with a graded thickness or composition so as to adapt the resistance against erosion to the intensity of wear of each part of the stirrer, thereby combining the advantages of the different coatings shown in Figure 4.

Various modifications can be made to the apparatus shown in Figures 3, 3a and 4. For instance, the shaft shown in Figure 3 may be modified so as to consist of an assembly whose non-immersed part is made of a material other than carbon-based, such as a metal and/or a ceramic, which is resistant to oxidation and corrosion and which, therefore, does not need any coating, whereas the immersed part of the shaft is made of carbon-based material protected with a coating according to the invention. Such a composite shaft would preferably be designed to permit disassembly of the immersed and non-immersed parts so the immersed part can be replaced when worn.

Likewise, a carbon-based non-immersed part of the shaft may be protected from oxidation and corrosion with a coating and/or impregnation of a phosphate of aluminium, in particular applied in the form of a compound selected from monoaluminium phosphate, aluminium phosphate, aluminium polyphosphate, aluminium metaphosphate, and mixtures thereof. Suitable coating and/or impregnation compositions are disclosed in US Patent 5,534,119 (Sekhar). It is also possible to protect the non-immersed part of the shaft with a coating and/or impregnation of a boron compound, such as a compound selected from boron oxide, boric acid and tetraboric acid. Suitable coating and/or impregnation compositions are disclosed in US Patent 5,486,278 (Manganiello/Duruz/Bellò) and in co-pending application WO97/26626 (de Nora/Duruz/Berclaz).

In a modification, the coating of the invention may simply be applied to any part of the stirrer in contact with the molten metal, to be protected against erosion, oxidation and/or corrosion during operation.

The invention will be further described in the following examples.

### Example 1

A slurry according to the invention was prepared by suspending a refractory hard metal compound consisting of 47.5 g surface-oxidised particulate spherical TiB₂ (-325 mesh) having a TiO₂ surface film and a metal oxide in the form of 2.5 g TiO₂ (-325 mesh) in a colloidal carrier consisting of 20 ml colloidal Al₂O₃ (NYACOL® Al-20, a milky liquid with a colloidal particle size of about 40 to 60 nanometer) and 1 ml PEG (polyethylene glycol) which increases the viscosity of the slurry and enhances its capacity to be applied by painting as well as the adherence and coherence of the final coating.

This slurry produces upon heat treatment an oxide matrix of titanium-aluminium mixed oxide from the reaction of the colloidal oxide Al₂O₃ and TiO₂ present as suspended oxide particles and oxide film covering the suspended TiB₂ particles. The oxide matrix contains and bonds TiB₂ particles.

### Example 1a

The constituents of the slurry of Example 1 may be changed as shown in the following Table in which each line represents possible combinations of constituents:

| Colloidal or Polymeric Oxides | Suspended Metal Oxides | Suspended Surface-Oxidised Refractory Metal Compounds |
|---|---|---|
| Al₂O₃ | TiO₂, MgO or SiO₂ | TiB₂, SiC, TiC or TiN |
| TiO₂ | Al₂O₃ or MgO | SiC or SiN |
| SiO₂ | Al₂O₃ or MgO | TiB₂, TiC or TiN |

### Example 2

Another slurry according to the invention was prepared by suspending a refractory hard metal compound consisting of 92.5 g particulate needle-shaped surface-oxidised TiB₂ (-325 mesh) having a TiO₂ surface oxide film, an aluminium-wetting agent in the form of 2.5 g particulate Fe₂O₃ (-325 mesh) and a metal oxide in the form of 2.5 g TiO₂ (-325 mesh) in a colloid consisting of a combination of two grades of colloidal Al₂O₃, namely 28 ml of a first grade of colloidal Al₂O₃ (NYACOL® Al-20, a milky liquid with a colloidal particle size of about 40 to 60 nanometer) and 24 ml of a second grade of colloidal Al₂O₃ (CONDEA® 10/2 Sol, a clear, opalescent liquid with a colloidal particle size of about 10 to 30 nanometer).

This slurry produces upon heat treatment a matrix of mixed oxides containing titanium-aluminium mixed oxide and a small amount of iron-titanium-aluminium mixed oxide from the reaction of TiO₂, Fe₂O₃ and Al₂O₃. This matrix contains and bonds the TiB₂ and Fe₂O₃ particles.

### Example 2a

Example 2's slurry composition consists of an aluminium-wetting agent (Fe₂O₃) and a reaction mixture made of the colloid (Al₂O₃), the suspended refractory metal compound (TiB₂) the suspended metal oxide (TiO₂). This Example can be modified by completely or partly substituting the aluminium-wetting agent with copper oxide and/or nickel oxide, and/or by varying the composition of the reaction mixture as in Example 1a.

### Example 3

A further slurry for producing a temporary aluminium-wettable start-up layer that can be used in combination with coatings according to the invention, e.g. as disclosed in Example 4, was prepared as follows. An amount of 60 g of surface oxidised copper particles (-325 mesh) was suspended in a carrier consisting of 13 ml of colloidal Al₂O₃ (7 ml NYACOL® Al-20, a milky liquid with a colloidal particle size of about 40 to 60 nanometer and 6 ml CONDEA® 10/2 Sol, a clear, opalescent liquid with a colloidal particle size of about 10 to 30 nanometer) and 1 ml of PEG (polyethylene glycol) which increases the viscosity of the slurry and enhances its capacity to be applied by painting as well as the adherence and coherence of the final coating.

Upon heat treatment the slurry produces an alumina matrix containing and bonding the oxidised copper particles.

As a modification, oxidised particles of nickel and/or iron may be used to substitute in part or completely the oxidised copper particles in colloidal alumina (CONDEA 25/5 with a pH > 7).

### Example 4

Three carbon cathodes for use in a drained cell for the production of aluminium were each coated with the slurries of Examples 1, 2 and 3 as follows:

First, an anchorage layer having a thickness of about 100 micron was painted onto the exposed surface of the carbon cathode from the slurry of Example 1. The anchorage layer was allowed to dry for 30 minutes.

The anchorage layer was covered with an aluminium-wettable layer obtained by painting 8 layers of the slurry of Example 2. Each applied layer was allowed to dry for 30 minutes before application of the next layer. The final aluminium-wettable layer had a thickness of about 1.8 mm.

The aluminium-wettable layer was then covered with a temporary start-up layer obtained by painting 1 layer of the slurry of Example 3. The start-up layer had a thickness of about 100 to 150 micron.

The coating formed by the anchorage layer, the aluminium-wettable layer and the start-up layer on the carbon cathode was allowed to dry for 24 hours.

Two of the three cathodes were then covered with an aluminium sheet having a thickness of about 1.5 cm and heated in an oven at a temperature of about 850-900°C in air.

The first cathode was extracted from the oven after 30 minutes and allowed to cool down to ambient temperature. Examination of a cross-section of the coating showed that aluminium had infiltrated the start-up layer so that the coating was superficially wetted by molten aluminium. No reaction between aluminium and iron oxide had yet taken place.

The second cathode was extracted from the oven after 24 hours and allowed to cool down to ambient temperature. Examination of a cross-section of the coating showed that aluminium had infiltrated the start-up layer and the aluminium-wettable layer. Part of the aluminium had reacted with the Fe₂O₃ wetting agent to form Al₂O₃ and Fe metal. Aluminium infiltration had been stopped on the anchorage layer for lack of aluminium-wetting agent which demonstrated that the anchorage layer is an effective barrier layer against penetration of aluminium into the carbon cathode.

The aluminium metal infiltration into the start-up layer and the aluminium-wettable layer enhanced the conductivity of the coating. At ambient temperature, the perpendicular electrical resistance through the coating was less than 1 ohm after infiltration versus more than 500 ohm before infiltration.

The coatings on both cathodes showed a continuous matrix of titanium-aluminium mixed oxides between the anchorage layer and the aluminium-wettable layer which guarantees an excellent adherence between the two layers. In both cases the particles of TiB₂ had not been oxidised by the heat treatment and wettability of the coating by aluminium was very good. The angle of wettability was less than 10 deg.

The third coated carbon cathode was used in an aluminium production drained cell as follows:

The cathode covered with the dried coating according to the invention was covered in the cell with a 1.5 cm thick sheet of aluminium. The cell was heated to a temperature of about 850-900°C by passing an electrical current between the cathode and facing anodes through carbon powder. Other start-up heating procedures could also have been used, e.g. using gas burners to generate heat.

After 30 minutes at 850-900°C, the start-up coating was superficially wetted by molten aluminium which constitutes a barrier against damaging fluoride-based molten electrolyte constituents, such as sodium compounds, and a cryolite based electrolyte was filled into the cell.

The cell was further heated to 960°C at which temperature the cell was operated under an electrolysis current density of 0.8 A/cm² to produce aluminium under conventional steady state conditions.

As a modification, the cathode can be coated only with a single layer of the composition of the anchorage layer if it is to be used in a cell operating with a pool of aluminium. In this case, high wettablility of aluminium is not critical and the coating may not necessarily comprise an aluminium-wettable layer and a start-up layer on the anchorage layer.

However, even for operation with an aluminium pool, the coating preferably comprises an aluminium-wettable layer on the anchorage layer for improved protection. Furthermore, to achieve maximum protection of the carbon cathode, the coating comprises in addition a start-up top layer.

## Claims

1. A component which is made of or coated with a refractory material for use at high temperature, the refractory material comprising particles of a refractory metal compound in an oxide matrix, the refractory metal compound being selected from metal borides, silicides, nitrides, carbides and phosphides, the oxide matrix comprising a bonding mixed oxide made of a single mixed oxide or a plurality of miscible mixed oxides, the refractory material being obtainable from a heat treated slurry that comprises:
a) a colloidal and/or polymeric carrier that comprises colloidal and/or polymeric oxide of at least one metal;
b) suspended particles of the refractory metal compound that are covered with an integral film of oxide of the metal of the refractory metal compound, the oxide film being reactable upon heat treatment with said colloidal and/or polymeric oxide to form a mixed oxide comprised in said bonding mixed oxide; and
c) suspended metal oxide particles which are reactable upon heat treatment with said colloidal and/or polymeric oxide to form a mixed oxide comprised in said bonding mixed oxide,
wherein the bonding mixed oxide, including the mixed oxide formed from the reaction of the oxide film and the colloidal and/or polymeric oxide, consists of:
- a single mixed oxide when the metal of the suspended metal oxide particles is the same as the metal of the suspended refractory metal compound particles and the reactable oxide of said colloidal and/or polymeric oxide is an oxide of one metal only; or
- a plurality of miscible mixed oxides when at least one metal of the suspended metal oxide particles is different to the metal of the suspended refractory metal compound particles and/or when said colloidal and/or polymeric oxide comprises reactable oxides of different metals.

2. The component of claim 1, wherein the bonding mixed oxide comprises a mixed oxide of the metal(s) of said colloidal and/or polymeric oxide and at least one metal selected from titanium, silicon, chromium, vanadium, zirconium, hafnium, niobium, tantalum, molybdenum and cerium which is derived from the oxide film of said refractory metal compound suspended particles and/or said suspended metal oxide particles.

3. The component of claim 1 or 2, wherein said colloidal and/or polymeric oxide is selected from colloidal and/or polymeric alumina, ceria, lithia, magnesia, silica, thoria, yttria, zirconia, tin oxide and zinc oxide, and mixtures thereof.

4. The component of claim 1, wherein the refractory metal compound is titanium diboride and the bonding mixed oxide comprises titanium-aluminium mixed oxide.

5. The component of any preceding claim, wherein the bonding mixed oxide constitutes at least 10 weight%, typically at least 30 weight% and preferably at least 50 weight%, of the oxide matrix, the oxide matrix optionally further comprising non-reacted particles of said colloidal and/or polymeric oxide and/or non-reacted particles of said suspended metal oxide.

6. The component of any preceding claim, comprising a body coated with the refractory-material coating, the coating comprising at least two different grades of refractory compounds in one or more layers, in particular a coating comprising a plurality of layers, each layer containing only one grade of refractory metal compound.

7. The component of any preceding claim, wherein the refractory material is producible from a colloidal and/or polymeric carrier that contains different grades of colloidal and/or polymeric particles.

8. The component of any preceding claim, wherein the bonding mixed oxide and the refractory metal compound are substantially inert to and insoluble in molten aluminium.

9. The component of any preceding claim, which during use is in contact with molten aluminium, molten fluoride-containing electrolyte and/or oxidising gas.

10. The component of claim 9, wherein the oxide matrix further comprises an aluminium-wetting agent consisting of a metal oxide, such as an oxide selected from oxides of manganese, iron, cobalt, nickel, copper, zinc, molybdenum, the Lanthanides and rare earth metals, that is reactable with molten aluminium to form alumina and an alloy of aluminium and the metal of the wetting agent making the refractory material aluminium-wettable.

11. The component of claim 10, comprising a carbon body coated with the aluminium-wettable refractory material, the aluminium-wettable refractory material being bonded to the carbon body through an anchorage layer which is free from constituents that are miscible or able to react with molten aluminium upon heat treatment, the anchorage layer forming a barrier against molten aluminium, the composition of the aluminium-wettable refractory material optionally consisting of the composition of the anchorage layer plus the aluminium-wetting agent, the aluminium-wettable refractory material being optionally covered with a start-up layer applied from a slurry made of particulate wetting oxide in a polymeric and/or colloidal binder, the start-up layer constituting upon heat treatment a temporary layer protecting said aluminium-wettable refractory material and promoting wetting of the aluminium-wettable refractory material by molten aluminium.

12. The component of claim 11, wherein the anchorage layer comprises a heat treated colloidal and/or polymeric carrier which contains only one grade of colloidal and/or polymeric particles.

13. The component of claim 11 or 12, wherein the aluminium-wettable refractory material is producible from a colloidal and/or polymeric carrier that contains different grades of colloidal and/or polymeric particles.

14. The component of any one of claims 9 to 13, which is a component of an aluminium electrowinning cell, in particular a cathode, part of a cell bottom or a cell sidewall.

15. The component of any one of claims 1 to 7, which is a holder for arc electrodes or a carbon arc electrode having at least one inactive surface coated with said refractory material.

16. The component of any one of claims 1 to 7, which is a component of an apparatus for treating molten metal.

17. A slurry which upon heat treatment produces a refractory material for use at high temperature, the refractory material comprising particles of a refractory metal compound in an oxide matrix, the refractory metal compound being selected from metal borides, silicides, nitrides, carbides and phosphides, the oxide matrix comprising a bonding mixed oxide made of a single mixed oxide or a plurality of miscible mixed oxides, the slurry comprising:
a) a colloidal and/or polymeric carrier that comprises colloidal and/or polymeric oxide of at least one metal;
b) suspended particles of the refractory metal compound that are covered with an integral film of oxide of the metal of the refractory metal compound, the oxide film being reactable upon heat treatment with said colloidal and/or polymeric oxide to form a mixed oxide comprised in said bonding mixed oxide; and
c) suspended metal oxide particles which are reactable upon heat treatment with said colloidal and/or polymeric oxide to form a mixed oxide comprised in said bonding mixed oxide.

18. A method of manufacturing a component made of a refractory material or coated with a refractory material, comprising providing a slurry according to claim 17 and heat treating the slurry to react the colloidal and/or polymeric oxide with the oxide film of the refractory metal compound and with the suspended metal oxide particles to form said bonding mixed oxide of the oxide matrix that contains the refractory metal compound particles, wherein the bonding mixed oxide consists of:
- a single mixed oxide when the metal of the suspended metal oxide particles is same as the metal of the suspended refractory metal compound particles and the reactable oxide of said colloidal and/or polymeric oxide is an oxide of one metal only; or
- a plurality of miscible mixed oxides when at least one metal of the suspended metal oxide particles is different to the metal of the suspended refractory metal compound particles and/or when said colloidal and/or polymeric oxide comprises reactable oxides of different metals.

19. The method of claim 18, for producing a component made of the refractory material.

20. The method of claim 18, for producing a component coated with the refractory material by applying one or more layers of the slurry onto the component and heat treating the slurry.

21. An apparatus for operation at high temperature which comprises at least one component as defined in any one of claims 1 to 16 that is exposed during operation to high temperature conditions.

22. The apparatus of claim 21, which is an aluminium electrowinning cell, said component being a cathode, a cell sidewall or part of a cell bottom.

23. The apparatus of claim 21, which is an arc furnace for treating steel, said component being a coated carbon arc electrode or a holder for arc electrodes.

24. The apparatus of claim 21, which is an apparatus for treating molten metal, said component, such as a vessel for containing molten metal or a stirrer for stirring molten metal, being exposable to the molten metal and/or an oxidising media, in particular to moving contact with molten metal.

25. A method of producing aluminium in a cell as defined in claim 22 which contains alumina dissolved in a fluoride-containing molten electrolyte and in which said component is exposed to at least one of molten electrolyte, cathodically reduced aluminium and anodically evolved gas, the method comprising electrolysing the molten electrolyte containing the dissolved alumina to cathodically reduce aluminium, in particular on a drained cathode, and anodically evolve gas.

26. A method of treating iron or steel in a furnace as defined in claim 23 in which during operation said coated carbon arc electrode or holder for arc electrodes is exposed to a high temperature oxidising media, comprising passing an electric current through the electrode to produce molten iron.

27. A method of treating a molten metal in an apparatus as defined in claim 24, comprising imparting a relative movement between the molten metal and said component.

## Patentansprüche

1. Komponente, die hergestellt ist aus oder beschichtet ist mit hitzebeständigem Material zur Verwendung bei hoher Temperatur, wobei das hitzebeständige Material Partikel aus hitzebeständiger Metallverbindung in einer Oxidmatrix umfasst, wobei die hitzebeständige Metallverbindung ausgewählt ist aus Metallboriden, -siliciden, -nitriden, -carbiden und -phosphiden, die Oxidmatrix bindendes Mischoxid umfasst, das aus einem einzigen Mischoxid oder einer Vielzahl mischbarer Mischoxide hergestellt ist, wobei das hitzebeständige Material aus einer wärmebehandelten Aufschlämmung erhältlich ist, die
a) kolloidalen und/oder polymeren Träger, der kolloidales und/oder polymeres Oxid von mindestens einem Metall umfasst;
b) suspendierte Partikel der hitzebeständigen Metallverbindung, die mit einem integralen Film aus Oxid des Metalls der hitzebeständigen Metallverbindung bedeckt sind, wobei der Oxidfilm bei Wärmebehandlung mit dem kolloidalen und/oder polymeren Oxid umsetzbar ist, um Mischoxid zu bilden, das in dem bindenden Mischoxid enthalten ist, und
c) suspendierte Metalloxidpartikel umfasst, die bei Wärmebehandlung mit dem kolloidalen und/oder polymeren Oxid umsetzbar sind, um Mischoxid zu bilden, das in dem bindenden Mischoxid enthalten ist,
wobei das bindende Mischoxid einschließlich des Mischoxids, das aus der Reaktion des Oxidfilms und des kolloidalen und/oder polymeren Oxids gebildet ist, aus
- einem einzigen Mischoxid, wenn das Metall der suspendierten Metalloxidpartikel dasselbe wie das Metall der suspendierten Partikel der hitzebeständigen Metallverbindung ist, und das umsetzbare Oxid des kolloidalen und/oder polymeren Oxids Oxid nur eines Metalls ist, oder
- einer Vielzahl mischbarer Mischoxide besteht, wenn mindestens ein Metall der suspendierten Metalloxidpartikel sich von dem Metall der suspendierten Partikel der hitzebeständigen Metallverbindung unterscheidet und/oder wenn das kolloidale und/oder polymere Oxid umsetzbare Oxide unterschiedlicher Metalle umfasst.

2. Komponente nach Anspruch 1, bei der das bindende Mischoxid Mischoxid des Metalls/der Metalle des kolloidalen und/oder polymeren Oxids und mindestens eines Metalls ausgewählt aus Titan, Silicium, Chrom, Vanadium, Zirkonium, Hafnium, Niob, Tantal, Molybdän und Cer umfasst, das von dem Oxidfilm der suspendierten Partikel aus hitzebeständiger Metallverbindung und/oder den suspendierten Metalloxidpartikeln abgeleitet ist.

3. Komponente nach Anspruch 1 oder 2, bei der das kolloidale und/oder polymere Oxid ausgewählt ist aus kolloidalem und/oder polymerem Aluminiumoxid, Ceroxid, Lithiumoxid, Magnesiumoxid, Siliciumdioxid, Thoriumoxid, Yttriumoxid, Zirkoniumdioxid, Zinnoxid und Zinkoxid sowie Mischungen davon.

4. Komponente nach Anspruch 1, bei der die hitzebeständige Metallverbindung Titandiborid ist und das bindende Mischoxid Titan-Aluminium-Mischoxid umfasst.

5. Komponente nach einem der vorhergehenden Ansprüche, bei der das bindende Mischoxid mindestens 10 Gew.-%, in der Regel mindestens 30 Gew.-% und vorzugsweise mindestens 50 Gew.-% der Oxidmatrix stellt, die Oxidmatrix gegebenenfalls des Weiteren nicht-umgesetzte Partikel des kolloidalen und/oder polymeren Oxids und/oder nicht-umgesetzte Partikel des suspendierten Metalloxids umfasst.

6. Komponente nach einem der vorhergehenden Ansprüche, die einen Körper umfasst, der mit der Beschichtung aus hitzebeständigem Material beschichtet ist, wobei die Beschichtung mindestens zwei verschiedene Sorten hitzebeständiger Verbindungen in einer oder mehreren Schichten umfasst, insbesondere eine Beschichtung, die eine Vielzahl von Schichten umfasst, wobei jede Schicht nur eine Sorte hitzebeständige Metallverbindung enthält.

7. Komponente nach einem der vorhergehenden Ansprüche, bei der das hitzebeständige Material aus kolloidalem und/oder polymerem Träger herstellbar ist, der unterschiedliche Sorten kolloidaler und/oder polymerer Partikel enthält.

8. Komponente nach einem der vorhergehenden Ansprüche, bei der das bindende Mischoxid und die hitzebeständige Metallverbindung im Wesentlichen inert gegenüber und unlöslich in geschmolzenem Aluminium sind.

9. Komponente nach einem der vorhergehenden Ansprüche, die sich während des Gebrauchs in Kontakt mit geschmolzenem Aluminium, geschmolzenem fluoridhaltigem Elektrolyten und/oder oxidierendem Gas befindet.

10. Komponente nach Anspruch 9, bei der die Oxidmatrix des Weiteren Aluminiumbenetzungsmittel umfasst, das aus Metalloxid besteht, wie Oxid ausgewählt aus Oxiden von Mangan, Eisen, Kobalt, Nickel, Kupfer, Zink, Molybdän, den Lanthaniden und Seltenerdmetallen, das mit geschmolzenem Aluminium unter Bildung von Aluminiumoxid und einer Legierung von Aluminium und dem Metall des Benetzungsmittels umsetzbar ist, was das hitzebeständige Material aluminiumbenetzbar macht.

11. Komponente nach Anspruch 10, die einen Kohlenstoffkörper umfasst, der mit dem aluminiumbenetzbaren hitzebeständigen Material beschichtet ist, wobei das aluminiumbenetzbare hitzebeständige Material über eine Ankerschicht an den Kohlenstoffkörper gebunden ist, die frei von Bestandteilen ist, die bei Wärmebehandlung mit geschmolzenem Aluminium mischbar sind oder mit diesem reagieren können, wobei die Ankerschicht eine Barriere gegen geschmolzenes Aluminium bildet, wobei die Zusammensetzung des aluminiumbenetzbaren hitzebeständigen Materials gegebenenfalls aus der Zusammensetzung der Ankerschicht plus dem Aluminiumbenetzungsmittel besteht, wobei das aluminiumbenetzbare hitzebeständige Material gegebenenfalls mit einer Starterschicht bedeckt ist, die aus einer Aufschlämmung aufgebracht ist, die aus teilchenförmigem Benetzungsoxid in polymerem und/oder kolloidalem Bindemittel hergestellt ist, wobei die Starterschicht nach Wärmebehandlung eine temporäre Schicht bildet, die das aluminiumbenetzbare hitzebeständige Material schützt und Benetzung des aluminiumbenetzbaren hitzebeständigen Materials durch geschmolzenes Aluminium fördert.

12. Komponente nach Anspruch 11, bei der die Ankerschicht wärmebehandelten kolloidalen und/oder polymeren Träger umfasst, der nur eine Sorte kolloidaler und/oder polymerer Partikel enthält.

13. Komponente nach Anspruch 11 oder 12, bei der das aluminiumbenetzbare hitzebeständige Material aus kolloidalem und/oder polymerem Träger herstellbar ist, der unterschiedliche Sorten kolloidaler und/oder polymerer Partikel enthält.

14. Komponente nach einem der Ansprüche 9 bis 13, die eine Komponente einer Zelle zur elektrolytischen Gewinnung von Aluminium ist, insbesondere eine Kathode, ein Teil eines Zellbodens oder eine Zellseitenwand.

15. Komponente nach einem der Ansprüche 1 bis 7, die ein Halter für Lichtbogenelektroden oder eine Kohlenstofflichtbogenelektrode mit mindestens einer inaktiven Oberfläche ist, die mit dem hitzebeständigen Material beschichtet ist.

16. Komponente nach einem der Ansprüche 1 bis 7, die eine Komponente einer Vorrichtung zur Behandlung von geschmolzenem Metall ist.

17. Aufschlämmung, die bei Wärmebehandlung ein hitzebeständiges Material zur Verwendung bei hoher Temperatur produziert, wobei das hitzebeständige Material Partikel von hitzebeständiger Metallverbindung in einer Oxidmatrix umfasst, wobei die hitzebeständige Metallverbindung ausgewählt ist aus Metallboriden, -siliciden, -nitriden, -carbiden und -phosphiden, wobei die Oxidmatrix bindendes Mischoxid umfasst, das aus einm einzigen Mischoxid oder einer Vielzahl mischbarer Mischoxide hergestellt ist, wobei die Aufschlämmung:
a) kolloidalen und/oder polymeren Träger, der kolloidales und/oder polymeres Oxid von mindestens einem Metall umfasst;
b) suspendierte Partikel der hitzebeständigen Metallverbindung, die mit einem integralen Film aus Oxid des Metalls der hitzebeständigen Metallverbindung bedeckt sind, wobei der Oxidfilm bei Wärmebehandlung mit dem kolloidalen und/oder polymeren Oxid umsetzbar ist, um Mischoxid zu bilden, das in dem bindenden Mischoxid enthalten ist, und
c) suspendierte Metalloxidpartikel umfasst, die bei Wärmebehandlung mit dem kolloidalen und/oder polymeren Oxid umsetzbar sind, um Mischoxid zu bilden, das in dem bindenden Mischoxid enthalten ist.

18. Verfahren zur Herstellung einer Komponente, die aus hitzebeständigem Material hergestellt oder mit hitzebeständigem Material beschichtet ist, bei dem eine Aufschlämmung gemäß Anspruch 17 bereitgestellt wird und die Aufschlämmung wärmebehandelt wird, um das kolloidale und/oder polymere Oxid mit dem Oxidfilm der hitzebeständigen Metallverbindung und mit den suspendierten Metalloxidpartikeln umzusetzen, um das bindende Mischoxid der Oxidmatrix zu bilden, die die hitzebeständigen Metallverbindungspartikel enthält, wobei das bindende Mischoxid aus
- einem einzigen Mischoxid, wenn das Metall der suspendierten Metalloxidpartikel dasselbe wie das Metall der suspendierten Partikel der hitzebeständigen Metallverbindung ist, und das umsetzbare Oxid des kolloidalen und/oder polymeren Oxids Oxid von nur einem Metall ist, oder
- einer Vielzahl mischbarer Mischoxide besteht, wenn mindestens ein Metall der suspendierten Metalloxidpartikel sich von dem Metall der suspendierten Partikel der hitzebeständigen Metallverbindung unterscheidet und/oder wenn das kolloidale und/oder polymere Oxid umsetzbare Oxide unterschiedlicher Metalle umfasst.

19. Verfahren nach Anspruch 18 zur Herstellung einer Komponente, die aus hitzebeständigem Material hergestellt ist.

20. Verfahren nach Anspruch 18 zur Herstellung einer Komponente, die mit dem hitzebeständigen Material beschichtet ist, indem eine oder mehrere Schichten der Aufschlämmung auf die Komponente aufgebracht wird bzw. werden und die Aufschlämmung wärmebehandelt wird.

21. Vorrichtung zum Betrieb bei hoher Temperatur, die mindestens eine Komponente wie in einem der Ansprüche 1 bis 16 definiert umfasst, die während des Betriebs Hochtemperaturbedingungen ausgesetzt ist.

22. Vorrichtung nach Anspruch 21, die eine Zelle zur elektrolytischen Gewinnung von Aluminium ist, wobei die Komponente eine Kathode, eine Zellseitenwand oder ein Teil eines Zellbodens ist.

23. Vorrichtung nach Anspruch 21, die ein Lichtbogenofen zur Behandlung von Stahl ist, wobei die Komponente eine beschichtete Kohlenstofflichtbogenelektrode oder ein Halter für Lichtbogenelektroden ist.

24. Vorrichtung nach Anspruch 21, die eine Vorrichtung zum Behandeln von geschmolzenem Metall ist, wobei die Komponente, wie ein Gefäß, das geschmolzenes Metall enthalten soll, oder ein Rührer zum Rühren von geschmolzenem Metall, dem geschmolzenen Metall und/oder oxidierenden Medien ausgesetzt werden kann, insbesondere für Bewegungskontakt mit geschmolzenem Metall.

25. Verfahren zur Herstellung von Aluminium in einer Zelle wie in Anspruch 22 definiert, die in fluoridhaltigem geschmolzenen Elektrolyten gelöstes Aluminiumoxid enthält, und wobei die Komponente mindestens einem von geschmolzenem Elektrolyten, kathodisch reduziertem Aluminium und sich anodisch entwickelndem Gas ausgesetzt wird, wobei in dem Verfahren der geschmolzene Elektrolyt, der das gelöste Aluminiumoxid enthält, elektrolysiert wird, um kathodisch Aluminium zu reduzieren, insbesondere an einer Drain-Kathode (Ablauf-Kathode), und anodisch Gas zu entwickeln.

26. Verfahren zum Behandeln von Eisen oder Stahl in einem Ofen wie in Anspruch 23 definiert, bei dem während des Betriebs die beschichtete Kohlenstofflichtbogenelektrode oder der Halter für Lichtbogenelektroden bei hoher Temperatur oxidierenden Medien ausgesetzt wird, bei dem ein elektrischer Strom durch die Elektrode geleitet wird, um geschmolzenes Eisen zu produzieren.

27. Verfahren zum Behandeln von geschmolzenem Metall in einer Vorrichtung wie in Anspruch 24 definiert, bei dem eine relative Bewegung zwischen dem geschmolzenen Metall und der Komponente herbeigeführt wird.

## Revendications

1. Composant qui est réalisé en ou revêtu d'une matière réfractaire pour une utilisation à température élevée, la matière réfractaire comprenant des particules d'un composé métallique réfractaire dans une matrice d'oxyde, le composé métallique réfractaire étant choisi à partir de borures, siliciures, nitrures, carbures et phosphures métalliques, la matrice d'oxyde comprenant un oxyde mélangé de liaison réalisé en un oxyde mélangé unique ou une pluralité d'oxydes mélangés miscibles, la matière réfractaire pouvant être obtenue à partir d'un coulis thermiquement traité qui comprend :
a) un support colloïdal et/ou polymère qui comprend un oxyde colloïdal et/ou polymère d'au moins un métal ;
b) des particules en suspension du composé métallique réfractaire qui sont revêtues d'un film intégré d'oxyde du métal du composé métallique réfractaire, le film d'oxyde pouvant réagir à la suite de traitement thermique avec ledit oxyde colloïdal et/ou polymère pour former un oxyde mélangé compris dans ledit oxyde mélangé de liaison ; et
c) des particules d'oxyde métallique en suspension qui peuvent réagir à la suite de traitement thermique avec ledit oxyde colloïdal et/ou polymère pour former un oxyde mélangé compris dans ledit oxyde mélangé de liaison,
dans lequel l'oxyde mélangé de liaison, comportant l'oxyde mélangé formé à partir de la réaction du film d'oxyde et de l'oxyde colloïdal et/ou polymère, se compose de :
- un oxyde mélangé unique quand le métal des particules d'oxyde métallique en suspension est le même que le métal des particules du composé métallique réfractaire en suspension et l'oxyde pouvant réagir dudit oxyde colloïdal et/ou polymère est un oxyde en un seul métal ; ou
- une pluralité d'oxydes mélangés miscibles quand au moins un métal des particules d'oxyde métallique en suspension est différent du métal des particules du composé métallique réfractaire en suspension et/ou quand ledit oxyde colloïdal et/ou polymère comprend des oxydes de différents métaux pouvant réagir.

2. Composant selon la revendication 1, dans lequel l'oxyde mélangé de liaison comprend un oxyde mélangé du métal (des métaux) dudit oxyde colloïdal et/ou polymère et au moins un métal choisi à partir de titane, silicium, chrome, vanadium, zirconium, hafnium, niobium, tantale, molybdène et cérium qui est dérivé du film d'oxyde desdites particules en suspension du composé métallique réfractaire et/ou desdites particules d'oxyde métallique en suspension.

3. Composant selon la revendication 1 ou 2, dans lequel ledit oxyde colloïdal et/ou polymère est choisi à partir d'alumine, d'oxyde de cérium, de lithine, de magnésie, de silice, de thorine, d'yttria, de zircone, d'oxyde d'étain et d'oxyde de zinc colloïdaux et/ou polymères et de mélanges de ceux-ci.

4. Composant selon la revendication 1, dans lequel le composé métallique réfractaire est du diborure de titane et l'oxyde mélangé de liaison comprend de l'oxyde mélangé de titane-aluminium.

5. Composant selon une quelconque revendication précédente, dans lequel l'oxyde mélangé de liaison constitue au moins 10% en poids, typiquement au moins 30% en poids et, de préférence, au moins 50% en poids de la matrice d'oxyde, la matrice d'oxyde comprenant éventuellement de plus des particules n'ayant pas réagi dudit oxyde colloïdal et/ou polymère et/ou des particules n'ayant pas réagi dudit oxyde métallique en suspension.

6. Composant selon une quelconque revendication précédente, comprenant un corps enrobé du revêtement en matière réfractaire, le revêtement comprenant au moins deux classes différentes de composés réfractaires en une ou plusieurs couches, en particulier un revêtement comprenant une pluralité de couches, chaque couche contenant seulement une classe de composé métallique réfractaire.

7. Composant selon une quelconque revendication précédente, dans lequel la matière réfractaire peut être produite à partir d'un support colloïdal et/ou polymère qui contient différentes classes de particules colloïdales et/ou polymères.

8. Composant selon une quelconque revendication précédente, dans lequel l'oxyde mélangé de liaison et le composé métallique réfractaire sont sensiblement inertes vis-à-vis de l'aluminium fondu et insolubles dans celui-ci.

9. Composant selon une quelconque revendication précédente, qui, pendant l'utilisation, est en contact avec l'aluminium fondu, l'électrolyte fondu contenant du fluorure et/ou le gaz oxydant.

10. Composant selon la revendication 9, dans lequel la matrice d'oxyde comprend de plus un agent mouillable par l'aluminium composé d'un oxyde métallique, tel qu'un oxyde choisi à partir d'oxydes de manganèse, fer, cobalt, nickel, cuivre, zinc, molybdène, des lanthanides et métaux des terres rares, qui peut réagir avec l'aluminium fondu pour former de l'alumine et un alliage d'aluminium et le métal de l'agent de mouillage fabriquant la matière réfractaire mouillable par l'aluminium.

11. Composant selon la revendication 10, comprenant un corps carboné enrobé de la matière réfractaire mouillable par l'aluminium, la matière réfractaire mouillable par l'aluminium étant liée au corps carboné par une couche d'ancrage qui est dépourvue de constituants qui sont miscibles ou susceptibles de réagir avec l'aluminium fondu lors de traitement thermique, la couche d'ancrage formant une barrière vis-à-vis de l'aluminium fondu, la composition de la matière réfractaire mouillable par l'aluminium étant éventuellement composée de la composition de la couche d'ancrage plus l'agent de mouillage par l'aluminium, la matière réfractaire mouillable par l'aluminium étant éventuellement recouverte d'une couche de départ appliquée à partir d'un coulis réalisé en un oxyde de mouillage particulaire dans un liant polymère et/ou colloïdal, la couche de départ constituant, lors d'un traitement thermique, une couche temporaire protégeant ladite matière réfractaire mouillable par l'aluminium et favorisant le mouillage de la matière réfractaire mouillable par l'aluminium par l'aluminium fondu.

12. Composant selon la revendication 11, dans lequel la couche d'ancrage comprend un support colloïdal et/ou polymère traité thermiquement qui contient une seule classe de particules colloïdales et/ou polymères.

13. Composant selon la revendication 11 ou 12, dans lequel la matière réfractaire mouillable par l'aluminium peut être produite à partir d'un support colloïdal et/ou polymère qui contient différentes classes de particules colloïdales et/ou polymères.

14. Composant selon une quelconque des revendications 9 à 13, qui est un composant d'une cuve d'électro-obtention d'aluminium, en particulier une cathode, une partie d'un fond de la cuve ou une paroi latérale de la cuve.

15. Composant selon une quelconque des revendications 1 à 7, qui est un support pour des électrodes à arc ou une électrode à arc en carbone ayant au moins une surface inactive enrobée de ladite matière réfractaire.

16. Composant selon une quelconque des revendications 1 à 7, qui est un composant d'un appareil pour traiter le métal en fusion.

17. Coulis qui, lors d'un traitement thermique, produit une matière réfractaire pour une utilisation à température élevée, la matière réfractaire comprenant des particules d'un composé métallique réfractaire dans une matrice d'oxyde, le composé métallique réfractaire étant choisi à partir de borures, siliciures, nitrures, carbures et phosphures métalliques, la matrice d'oxyde comprenant un oxyde mélangé de liaison réalisé en un oxyde mélangé unique ou une pluralité d'oxydes mélangés miscibles, le coulis comprenant :
a) un support colloïdal et/ou polymère qui comprend un oxyde colloïdal et/ou polymère d'au moins un métal ;
b) des particules en suspension du composé métallique réfractaire qui sont revêtues d'un film intégré d'oxyde du métal du composé métallique réfractaire, le film d'oxyde pouvant réagir à la suite de traitement thermique avec ledit oxyde colloïdal et/ou polymère pour former un oxyde mélangé compris dans ledit oxyde mélangé de liaison ; et
c) des particules d'oxyde métallique en suspension qui peuvent réagir à la suite de traitement thermique avec ledit oxyde colloïdal et/ou polymère pour former un oxyde mélangé compris dans ledit oxyde mélangé de liaison.

18. Procédé de fabrication d'un composant réalisé en une matière réfractaire ou enrobé d'une matière réfractaire, consistant à fournir un coulis selon la revendication 17 et à traiter thermiquement le coulis pour faire réagir l'oxyde colloïdal et/ou polymère avec le film d'oxyde du composé métallique réfractaire et avec les particules d'oxyde métallique en suspension pour former ledit oxyde mélangé de liaison de la matrice d'oxyde qui contient les particules du composé métallique réfractaire, dans lequel l'oxyde mélangé de liaison se compose de :
- un oxyde mélangé unique quand le métal des particules d'oxyde métallique en suspension est le même que le métal des particules du composé métallique réfractaire en suspension et l'oxyde pouvant réagir dudit oxyde colloïdal et/ou polymère est un oxyde en un seul métal ; ou
- une pluralité d'oxydes mélangés miscibles quand au moins un métal des particules d'oxyde métallique en suspension est différent du métal des particules du composé métallique réfractaire en suspension et/ou quand ledit oxyde colloïdal et/ou polymère comprend des oxydes de différents métaux pouvant réagir.

19. Procédé selon la revendication 18, pour produire un composant réalisé en la matière réfractaire.

20. Procédé selon la revendication 18, pour produire un composant enrobé avec la matière réfractaire en appliquant une ou plusieurs couches du coulis sur le composant et en chauffant thermiquement le coulis.

21. Appareil pour le fonctionnement à température élevée qui comprend au moins un composant tel que défini dans l'une quelconque des revendications 1 à 16, qui est exposé, pendant le fonctionnement, à des conditions de température élevée.

22. Appareil selon la revendication 21, qui est une cuve d'électroobtention d'aluminium, ledit composant étant une cathode, une paroi latérale de la cuve ou une partie d'un fond de la cuve.

23. Appareil selon la revendication 21, qui est un four à arc pour le traitement de l'acier, ledit composant étant une électrode à arc carbonée enrobée ou un support pour des électrodes à arc.

24. Appareil selon la revendication 21, qui est un appareil pour traiter le métal en fusion, ledit composant, tel qu'un récipient pour contenir le métal en fusion ou un agitateur pour agiter le métal en fusion, pouvant être exposé au métal en fusion et/ou aux milieux oxydants, en particulier pour déplacer le contact avec le métal en fusion.

25. Procédé pour produire de l'aluminium dans une cuve telle que définie dans la revendication 22, qui contient de l'alumine dissoute dans un électrolyte fondu contenant du fluorure et dans laquelle ledit composant est exposé à au moins l'un de l'électrolyte fondu, de l'aluminium réduit de façon cathodique et du gaz émis de façon anodique, le procédé consistant à électrolyser l'électrolyte fondu contenant l'alumine dissoute pour réduire de façon cathodique l'aluminium, en particulier sur une cathode inclinée, et dégager du gaz de façon anodique.

26. Procédé pour traiter du fer ou de l'acier dans un four tel que défini dans la revendication 23, où, pendant le fonctionnement, ladite électrode à arc carbonée enrobée ou ledit support pour les électrodes à arc est exposé à un milieu oxydant à température élevée, consistant à faire passer un courant électrique à travers l'électrode pour produire du fer en fusion.

27. Procédé pour traiter un métal en fusion dans un appareil tel que défini dans la revendication 24, consistant à imprimer un mouvement relatif entre le métal en fusion et ledit composant.
